# EUROPEAN PATENT APPLICATION

(11) **EP 2 460 579 A1**
(43) Date of publication of application: **06.06.2012**
(21) Application number: 11190868.7
(22) Date of filing: 28.11.2011
(51) Int. Cl.: B01D 53/86, C10G 45/00, H01B 3/20, H01F 27/14

(54) **Controlling the emission of volatile organic compounds from equipment for reclaiming oils**

(30) Priority: 02.12.2010 US 958571
(71) Applicant: General Electric Company, Schenectady, NY 12345 (US)
(72) Inventor: Denzer, Stephanie Ann, Doylestown, OH Ohio 44230 (US); Burns, William Todd, Mongadore, OH Ohio 44260 (US); Engstrom, John Michael, Chicago, IL Illinois 60631 (US)
(74) Representative: Illingworth-Law, William Illingworth

(57) **Abstract**

The emission of volatile organic compounds from apparatus for reclaiming used oils (12) is controlled. Both the apparatus for reclaiming the used oils (12) and the apparatus configured to control the emission of volatile organic compounds that are released at the reclaiming apparatus (14) can be located on an over-the-road vehicle (16, 18). The apparatus for reclaiming the used oils (12) can be configured to be operatively associated with an electric transformer (20) for reclaiming used oils in the transformer (20). The volatile organic compounds released in the apparatus for reclaiming used oils (12) can first be heated and thereafter passed through a catalytic oxidizer (90) in the apparatus configured to control the emission of volatile organic compounds (14), and the volatile organic compounds converted to gaseous products that are free of volatile organic compounds to a selected degree.

## Description

### BACKGROUND OF THE INVENTION

### FIELD OF THE INVENTION

The present invention relates generally to method and apparatus for controlling the emission of volatile organic compounds from equipment for reclaiming oil and, in particular, to controlling the emission of such volatile organic compounds by converting to a selected degree the volatile organic compounds that are released during the reclamation process to gaseous products that are free of volatile organic compounds.

### DISCUSSION OF THE PRIOR ART

Many processes are known in which oils of one type or another that have become contaminated as a result of their use under various circumstances are cleaned and contaminants removed from the oils so that the oils may be reused. Oils cleaned in this way are often referred to as "reclaimed oils," "recovered oils," or "reconditioned oils;" the processes employed to clean the oils are often referred to as "oil reclaiming or reclamation processes," "oil recovery processes," or "oil reconditioning processes;" and apparatus used in the processes are often referred to as "oil reclaiming or reclamation apparatus," "oil recovery apparatus," or "oil reconditioning apparatus."

One example of an oil reclamation process concerns oils that are used in electric transformer installations for the purpose of insulating the coils of the transformers to prevent electrical discharges and cooling the transformers so that the transformers do not become overheated. Transformer oils typically are stable at high temperatures, and, among other properties, it is their ability to cool and insulate while remaining stable that makes the oils useful in the transformers. However, transformer oils can become contaminated with, for example, dissolved gases, moisture, solid materials and products of oxidation. As a result of such contamination, the effectiveness of the oils can be degraded, a circumstance that is to be avoided for a variety of reasons. For example, ever-increasing standards being applied to the energy efficiency of power distribution transformers require that the transformer oils be maintained in an uncontaminated state and performing optimally.

The equipment and apparatus employed in the numerous oil reclamation processes that are typically carried out in the art can include rather permanent installations on site where the oil requiring reclamation is in use. However, there are instances in which the equipment and apparatus are mounted on over-the-road vehicles and the equipment and apparatus transported on the vehicles from job site to job site where the oils are reclaimed. Arrangements of the latter type can be employed in connection with the reclamation of oils employed in electric transformers for example.

Many of the oil reclamation processes that are in use involve the release of volatile organic compounds ("VOC's") from the used oils. For example, certain oil reclamation processes can involve an operation wherein a pressure reduction step is carried out on the used oil, such as by applying a vacuum, so that at least some of the components of the used oil are released from the used oil such as by vaporization or the release of the components from solution for example. And it can be the case that these components, in the form of VOC's, are discharged from the reclamation equipment to the atmosphere.

In general, volatile organic compounds or VOC's constitute organic compounds that have significant vapor pressures. The expression "volatile organic compound" is applied by the United States Environmental Protection Agency and, typically, by state and local environmental agencies to compounds that enter into photochemical reactions in the atmosphere. Because of the role VOC's play in this regard, the various environmental agencies have developed or are developing regulations concerning the control of VOC's from sources in general. In addition, certain compounds or materials that can include constituents of VOC's have been identified as hazardous compounds or materials and can be regulated separately from the regulations that apply to VOC's in general. For example, benzene and toluene, which can include constituents in the VOC streams exhausted from oil reclamation equipment, are additionally separately regulated in some instances as hazardous substances.

### BRIEF DESCRIPTION OF THE INVENTION

The following sets forth a simplified summary of examples of the present invention for the purpose of providing a basic understanding of examples of selected aspects of the invention. The summary does not constitute an extensive overview of all the aspects or embodiments of the invention. Neither is the summary intended to identify critical aspects or delineate the scope of the invention. The sole purpose of the summary is to present selected concepts of the invention in a simplified form as an introduction to the more detailed description of the invention that follows the summary.

In accordance with one aspect, the present invention provides a method of controlling emission of volatile organic compounds from oil reclaiming apparatus. THe method includes directing used oil for reclamation to the oil reclaiming apparatus and releasing volatile organic compounds in the oil reclaiming apparatus during the reclaiming of the used oil directed to the oil reclamation apparatus The method also includes directing the volatile organic compounds released in the oil reclaiming apparatus to apparatus for controlling the emission of volatile organic compounds and converting the volatile organic compounds in the apparatus for controlling the emission of volatile organic compounds to gaseous products that are free of volatile organic compounds to a selected degree. The method further includes discharging from the apparatus for controlling the emission of volatile organic compounds the gaseous products that are free of volatile organic compounds to a selected degree.

In accordance with another aspect, the present invention provides an oil reclaiming and volatile organic compound emission control system. The system includes and apparatus configured to reclaim used oil. The system also includes an apparatus operatively associated with the apparatus configured to reclaim used oil and also configured to control the emission of volatile organic compounds released in the apparatus configured to reclaim used oil.

### BRIEF DESCRIPTION OF THE DRAWINGS

The foregoing and other aspects of the present invention will be apparent to those skilled in the art to which the present invention relates from the detailed descriptions of examples of aspects and embodiments of the invention that follow with reference to the accompanying drawings, wherein the same reference numerals are used in the several figures to refer to the same parts or elements and in which:

FIG. 1 is a schematic side elevational view of a used oil reclaiming and volatile organic compound emission control system shown as mounted on an over-the-road vehicle for the purpose of servicing an electric transformer installation in accordance with one aspect of the invention; and

FIG. 2 is a flow diagram that illustrates an aspect of a method and apparatus for reclaiming used oil and controlling the emission of volatile organic compounds released during the oil reclamation process.

### DETAILED DESCRIPTION OF THE INVENTION

Examples of embodiments that incorporate one or more aspects of the present invention are described below with references, in some cases, to the accompanying drawings. These examples are not intended to be limitations on the present invention. Thus, for example, in some instances, one or more examples of the present invention described with reference to one aspect or embodiment can be utilized in other aspects and embodiments. In addition, certain terminology is used herein for convenience only and is not to be taken as limiting the present invention.

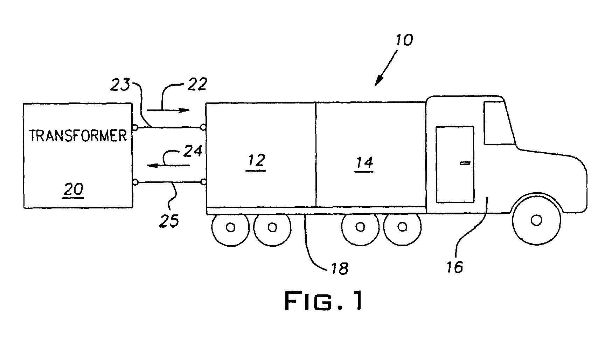

FIG. 1 illustrates an example of an embodiment of an oil reclaiming and volatile organic compound emission control system indicated generally at 10. In the example of FIG. 1, apparatus 12, configured to reclaim used oil, and apparatus 14, configured to control the emission of volatile organic compounds released in the apparatus 12 and operatively associated with the apparatus 12, are shown as located on an over-the-road vehicle that includes a tractor body 16 and a trailer body 18. Also by way of example in FIG. 1, the oil reclaiming and volatile organic compound emission control system 10 is illustrated as located in proximity to an electric transformer installation 20 so as to reclaim used oil from electric transformers such as when the oil, as a result of performing its cooling and insulating functions, becomes contaminated with, for example, dissolved gases, moisture, solid materials and products of oxidation. In that case, the apparatus 12 for reclaiming used oil is configured to be operatively connected to the electric transformer installation 20 whereby used oil from the electric transformers can be directed to and reclaimed at the apparatus 12. In the example of the invention illustrated in FIG. 1, the used oil is indicated as being directed to the oil reclaiming apparatus by the arrow 22 through line or conduit 23 and the reclaimed oil is indicated as being returned to the transformer installation 20 by the arrow 24 through line or conduit 25 after having had contaminants removed.

As can be understood, the installation of the oil reclaiming and volatile organic compound emission control system 10 on an over-the-road vehicle such as the tractor body 16 and trailer body 18, as illustrated in FIG. 1, allows the system to be transported from site to site at which used oil is to be reclaimed. The reference to an "over-the-road vehicle" is intended to refer to a vehicle that is authorized to travel over public roadways so that the system 10 can be transported from job site to job site. This arrangement avoids the necessity of providing numerous permanent or semi-permanent used oil reclaiming and volatile organic compound emission control systems for the purpose of servicing multiple sites. However, systems such as the system 10, for example, do not have to be mounted on over-the-road vehicles and can be installed as permanent or semi-permanent fixtures at sites at which used oil is to be reclaimed. Additionally, it will be understood that that the system 10 is not limited to reclaiming used oil from electric transformers as illustrated in FIG. 1. Thus, the system 10 can be employed to reclaim used oil from other sources. For example, the principles of the present invention can be applied to the reclamation of lubricating oils.

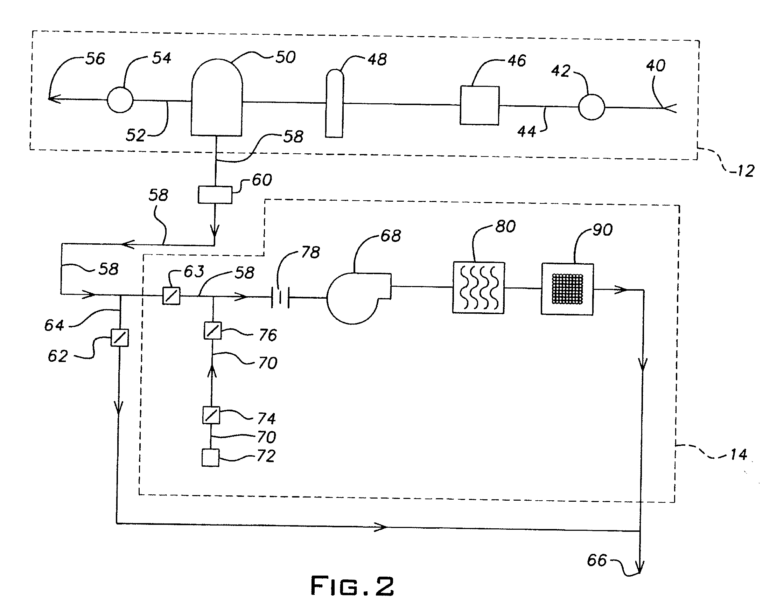

FIG. 2 includes a flow diagram that illustrates an example of the manner in which used oil can be reclaimed and the emission of volatile organic compounds released in connection with the reclamation of the used oil controlled, for example, in accordance with the illustrative embodiment of the invention shown in FIG. 1. In the example of FIG. 2, the method of controlling the emission of volatile organic compounds from the oil reclaiming apparatus 12 includes directing used oil for reclamation, such as from the electric transformer installation 20 for example, to the oil reclaiming apparatus 12 and releasing volatile organic compounds in the oil reclaiming apparatus 12 during the reclaiming of the used oil that is directed to the oil reclamation apparatus. The volatile organic compounds releaseed in the oil reclaiming apparatus 12 are directed to the apparatus 14 for controlling the emission of volatile organic compounds, and the volatile organic compounds directed to the apparatus for controlling the emission of volatile organic compounds are converted to gaseous products that are free of volatile organic compounds to a selected degree. The gaseous products that are free of volatile organic compounds to a selected degree can then be discharged to the atmosphere or otherwise from the apparatus for controlling the emission of volatile organic compounds.

As will be understood, the emission of volatile organic compounds to the environment is undesirable. Such emissions to the environment from a variety of sources are being controlled by federal, state and local environmental agencies. Currently, the United States EPA defines a "volatile organic compound" as "any compound of carbon, excluding carbon monoxide, carbon dioxide, carbonic acid, metallic carbides or carbonates, and ammonium carbonate, which participates in atmospheric photochemical reactions." Certain organic compounds are excluded from the definition because they have been determined to have negligible photochemical reactivity. There can be somewhat different definitions applied to "volatile organic compounds" by state and local environmental agencies so that the terminology "volatile organic compounds" as used herein is intended to include any compound or collection of compounds that any environmental agency designates as a volatile organic compound the emission of which to the environment is regulated.

Volatile organic compounds that can be released in connection with the reclamation of used electric transformer oils and can be the subject of regulation include, but are not limited to, the following compounds: C₂, C₄, C₅, C₆, C₇, C₈ and C₉ hydrocarbons; acetone/2-propanone; benzene; toluene; ethyl benzene; xylenes; methyl ethyl ketone; methyl t-butyl ether; methylene chloride; trichloroethylene; 1,3-butadiene; 1,1,1-trichloroethane; 1,1-dichloroethane; and 1,2-dichloroethane. It is also the case that certain organic compounds the emission of which are regulated because they are designated volatile organic compounds are additionally separately regulated as hazardous substances or materials. Benzene is an example of such an organic compound. Consequently, the control of volatile organic compounds according to the present invention includes the control of these latter compounds both as volatile organic compounds and as hazardous substances.

Referring again to the example embodiment of FIG. 2, it is illustrated there that used oil from the transformer installation 20 enters the apparatus 12 via line 23 at oil inlet 40. A suitable pump such as a vacuum pump 42 serves to transport the used oil through a line or conduit 44 from the oil inlet 40 to a heat exchanger 46, where the used oil is suitably heated for reclamation purposes, through a filter 48, where solid contaminants are removed from the used oil, to an oil processing chamber 50. In the example embodiment of FIG. 2, the oil processing chamber 50 includes a vacuum system which is included in the apparatus 14 and is configured to reclaim the used oil by means of what includes, in effect, a distillation process. As is familiar to those having ordinary skill in the art, the used oil, having been heated in the heat exchanger 46, when it enters the oil processing chamber 50, is separated under the reduced pressure into the oils that can be reused in the transformers and other components, including the volatile organic compounds, that are released from the used oil in the vacuum chamber. The volatile organic compounds may have been generated in the first instance as a result of heat generated in the transformers or electrical discharges occurring in the transformers, and may be present in the used oil as liquids or dissolved gases for example. Additionally, some portion of the volatile organic compounds may simply be generated in the oil processing chamber 50 because the reduced pressure in the chamber is sufficiently low enough to vaporize a portion of the used oil that might otherwise be acceptable for reuse as reclaimed oil. In any event, there will be generated in the vacuum chamber, as the used oil is subjected to the operation of the chamber, volatile organic compounds that will have been released from the used oil whatever the origination of the volatile organic compounds may have been and however the release of the volatile organic compounds may have occurred.

The oil that can be used once again in the transformer installation 20 as reclaimed oil is separately collected in the oil processing chamber 50 and transported from the chamber through line 52 by pump 54 to the oil outlet 56 at the apparatus 12. From the outlet 56, the reclaimed oil is directed to the transformer installation 20 through line 25 for reuse.

The volatile organic compounds that have been released from the used oil in the oil processing chamber 50 exit the chamber as gases and pass along line 58 to the oil mist filter 60 where any liquid materials associated with the gases are removed from the VOC's. The VOC's then travel to the junction of lines 58 and 64. At that junction, there is provided in the form of dampers 62 and 63 means configured to selectively allow the gaseous volatile organic compounds to bypass the apparatus 14 and be directed to a discharge location 66 outside the apparatus 14. As will be understood, when it is desired to bypass the apparatus 14, such as may be required as a result of an emergency, damper 62 will be opened and damper 63 will be closed. Alternatively, when it is desired to have the VOC's processed at the apparatus 14, damper 62 will be closed and damper 63 opened. The manner of providing for the cooperative functioning of the dampers 62 and 63 so as to either selectively bypass the apparatus 12 with the gaseous volatile organic compounds and direct the gaseous volatile organic compounds to the discharge location 66 outside the apparatus 14 or to direct the VOC's to the apparatus 14 will be familiar to those having ordinary skill in the art. The by-pass arrangement also can be utilized to close off communication between the oil processing chamber 50 and the apparatus 14 when a vacuum is being established in the vacuum chamber, thereby preventing the in-rush of gases, including air, to the vacuum chamber from the apparatus 14.

When the VOC's are to be directed to the apparatus 14 for the purpose of controlling the emission of the volatile organic compounds that are exhausted from the oil mist filter 60, damper 63 is opened and the VOC's are transported through line 58 by the action of the blower or pump 68 that is located downstream of the damper 63 and upstream of a heat exchanger or heating device 80. Oxygen from a source of oxygen 72 that can simply include a source of fresh air can be injected into the line 58 through a line 70 that can intersect line 58 between the blower 68 and the damper 63. The flow of oxygen can be controlled by a valve 74 and an adjustable limiting orifice 76 that can be similar to a throttling valve. The valve 74 can function in an example embodiment in a manner that will be familiar to those skilled in the art so that it is either fully open when damper 62 is closed and damper 63 is open or fully closed when damper 62 is open and damper 63 closed. The adjustable limiting orifice 76 can be set either manually or automatically to inject selected quantities of oxygen from the source 72 into the VOC's passing through line 58 to form a VOC/oxygen mixture. Thus, oxygen can be added in selected quantities from the source 72 to the gaseous volatile organic compounds through the cooperative functioning of the valve 74 and the adjustable limiting orifice 76, and, in the example of FIG. 2, the selected quantities of oxygen are added prior to the heating of the VOC's at the heat exchanger 80.

Included in the apparatus 14 and located upstream of the blower 68 and downstream of the intersection of lines 58 and 70 is a flow rate control device 78 in the nature of an orifice plate that is used to maintain a steady rate of flow of the VOC/oxygen mixture downstream of the flow rate control device. Thus, the device 78 is configured to control at a constant rate the rate at which the gaseous volatile organic compounds, to which oxygen has been added, are directed to the heat exchanger 80 and subsequently to a catalytic oxidizer 90. Stated otherwise, the gaseous volatile organic compounds containing oxygen can be directed for heating in the apparatus 14 at a selected constant rate. The device 78 also serves to prevent significant backflows of the VOC/oxygen mixture should they occur.

For the purpose of imparting sufficient thermal energy to the VOC/oxygen mixture and raising the temperature of the mixture to a level such that the VOC's can be adequately oxidized in the catalytic oxidizer 90, the VOC/oxygen mixture is heated in the heating device or heat exchanger 80. The heat exchanger 80 can include any suitable type of heating means for gaseous products such as, for example, an electrical resistance heater. Thus, the heating device 80 is configured to receive the gaseous volatile organic compounds released at the apparatus 12 and increase the thermal energy of the gaseous volatile organic compounds.

Following the heating of the volatile organic compounds at the heating device 80, the gaseous volatile organic compounds are passed through the catalytic oxidizer 90 located in the apparatus 14. The oxidizer is configured to convert the gaseous volatile organic compounds to gaseous products that are free of volatile organic compounds to a selected degree. Thus, the oxidizer converts the volatile organic compounds to gases such as carbon dioxide, nitrogen and nitrogen oxides and water vapor for example as will be understood by those having ordinary skill in the art. And the extent to which the volatile organic compounds are converted can be controlled, also as will be understood by those skilled in the art, by controlling the amount of thermal energy imparted to the VOC/oxygen mixture at the heating device 80 and/or the conversion efficiency of the catalytic oxidizer 90 for example. As a result, it will be possible to convert the gaseous volatile organic compounds to gaseous products that are free of volatile organic compounds to a selected degree. The extent to which the volatile organic compounds are converted can be largely influenced by the particular emission regulations that are applicable to the oil reclaiming and volatile organic compound emission control system. It is the case that such emission regulations can vary from jurisdiction to jurisdiction and it may be necessary, for example, in one jurisdiction, to convert a greater quantity of the volatile organic compounds so as to produce gaseous products that are free of volatile organic compounds to a greater extent than is required in another jurisdiction.

An example of a catalytic oxidizer that can be employed in one aspect of the invention includes a bed of bead-like elements, substantially spherical in their configuration, and packed together loosely enough to allow for some movement among the elements. The elements are made of a mixture of alumina and platinum. As an example, the mixture may include substantially 95% alumina and 5% platinum. The use of the bead-like elements provides a large surface area to be available for contact by the volatile organic compounds. The bead-like elements also have the advantage that the bed of elements, because the elements themselves have the ability to shift around somewhat, will not be damaged when subjected to jarring and bumping in those instances in which the oil reclaiming and volatile organic compound emission control system is installed on an over-the-road vehicle that can be required to travel over uneven road beds for example.

According to one aspect of the present invention, the emission of volatile organic compounds from apparatus for reclaiming used oils is controlled. The apparatus for reclaiming the used oils is operatively associated with apparatus configured to control the emission of volatile organic compounds that are released from the used oils during the reclaiming of the used oils.

According to another aspect of the invention both the apparatus for reclaiming used oils and the apparatus configured to control the emission of volatile organic compounds are located on an over-the-road vehicle. In an example of an embodiment of the invention, the apparatus for reclaiming used oils is configured to be operatively associated with an electric transformer installation for reclaiming used oil from the transformer installation.

According to a further aspect of the invention, the volatile organic compounds released in the apparatus for reclaiming used oils are first heated and thereafter passed through a catalytic oxidizer in the apparatus configured to control the emission of volatile organic compounds, and the volatile organic compounds are converted to gaseous products that are free of volatile organic compounds to a selected degree.

According to yet other aspects of the invention, selected quantities of oxygen can be added to the volatile organic compounds before they are heated and the volatile organic compounds can be directed both for heating and to the catalytic oxidizer at a selected constant rate.

According to yet a further aspect of the invention, the apparatus configured to control the emission of volatile organic compounds can be bypassed if required, such as in the case of an emergency for example, and the volatile organic compounds directed to a discharge location outside the apparatus configured to control the emission of the volatile organic compounds.

The use of the terms "oil" and "oils" herein is not intended to limit the meanings of the terms to a single oil and a plurality of oils, respectively. Rather, each term is intended to encompass one or more oils unless the context in which the term is used indicates otherwise.

While the present invention has been described above and illustrated with reference to certain embodiments thereof, it is to be understood that the invention is not so limited. Thus, the present invention has applications to electrostatic precipitators in any circumstance where it is desirable to control electric current surges. These surges can arise as a result of sparking events occurring between electrostatic precipitator components having different electric potentials, such as discharge and collecting electrodes for example, or the electric current surges can arise in other contexts. Modifications and alterations will occur to those skilled in the art upon reading and understanding the specification, including the drawings. In any event, the present invention covers and includes any and all modifications and variations to the described embodiments that are encompassed by the following claims.

Various aspects and embodiments of the present invention are defmed by the following numbered clauses:
1. A method of controlling emission of volatile organic compounds from oil reclaiming apparatus (12), the method including:
   directing used oil for reclamation to the oil reclaiming apparatus (12);
   releasing volatile organic compounds in the oil reclaiming apparatus (12) during the reclaiming of the used oil directed to the oil reclaiming apparatus (12);
   directing the volatile organic compounds released in the oil reclaiming apparatus (12) to apparatus (14) for controlling the emission of volatile organic compounds;
   converting the volatile organic compounds in the apparatus (14) for controlling the emission of volatile organic compounds to gaseous products that are free of volatile organic compounds to a selected degree; and
   discharging from the apparatus (14) for controlling the emission of volatile organic compounds the gaseous products that are free of volatile organic compounds to a selected degree.
2. The method of clause 1, wherein both the oil reclaiming apparatus (12) and the apparatus (14) for controlling the emission of volatile organic compounds are located on an over-the-road vehicle (16, 18).
3. The method of clause 1 or clause 2, further including:
   directing to the oil reclaiming apparatus (12) for reclamation oil from an electric transformer installation (20).
4. The method of any preceding clause, wherein the oil reclaiming apparatus (12) includes an oil processing chamber (50) that includes a vacuum and that is configured to reclaim the used oil.
5. The method of any preceding clause, further including:
   releasing the volatile organic compounds as gaseous volatile organic compounds;
   heating the gaseous volatile organic compounds in the apparatus (14) for controlling the emission of volatile organic compounds; and
   passing the heated gaseous volatile organic compounds through a catalytic oxidizer (90) formed of bead-like elements and located in the apparatus (14) for controlling the emission of volatile organic compounds, and converting the gaseous volatile organic compounds to the gaseous products that are free of volatile organic compounds to a selected degree.
6. The method of any preceding clause, further including:
   adding to the gaseous volatile organic compounds selected quantities of oxygen prior to heating the gaseous volatile organic compounds.
7. The method of any preceding clause, further including:
   directing the gaseous volatile organic compounds containing oxygen for heating in the apparatus (14) for controlling the emission of volatile organic compounds at a selected constant rate.
8. The method of any preceding clause, further including:
   selectively bypassing the apparatus (14) for controlling the emission of volatile organic compounds with the gaseous volatile organic compounds and directing the gaseous volatile organic compounds to a discharge location (66) outside the apparatus (14) for controlling the emission of volatile organic compounds.
9. The method of any preceding clause, wherein both the oil reclaiming apparatus (12) and the apparatus (14) for controlling the emission of volatile organic compounds are located on an over-the-road vehicle (16, 18).
10. The method of any preceding clause, further including:
   directing to the oil reclaiming apparatus (12) for reclamation oil from an electric transformer installation (20).
11. An oil reclaiming and volatile organic compound emission control system (10) including:
   apparatus (12) configured to reclaim used oil; and
   apparatus (14) operatively associated with the apparatus (12) configured to reclaim used oil and also configured to control the emission of volatile organic compounds released in the apparatus (12) configured to reclaim used oil.
12. The system (10) of any preceding clause, wherein both the apparatus (12) configured to reclaim used oil and the apparatus (14) configured to control the emission of volatile organic compounds are located on an over-the-road vehicle (16, 18).
13. The system (10) of any preceding clause, wherein the apparatus (12) configured to reclaim used oil is also configured to be operatively connected to an electric transformer installation (20) whereby oil from the electric transformer installation (20) can be directed to the apparatus (12) configured to reclaim used oil.
14. The system (10) of any preceding clause, wherein the apparatus (12) configured to reclaim used oil includes an oil processing chamber (50) that includes a vacuum and that is configured to reclaim the used oil.
15. The system (10) of any preceding clause, wherein the apparatus (14) configured to control the emission of volatile organic compounds includes:
   a heating device (80) configured to receive gaseous volatile organic compounds released at the apparatus (12) configured to reclaim used oil and increase the thermal energy of the gaseous volatile organic compounds; and
   a catalytic oxidizer (90) formed of bead-like elements and configured to convert the gaseous volatile organic compounds to gaseous products that are free of volatile organic compounds to a selected degree.
16. The system (10) of any preceding clause, further including a source of oxygen (72) from which oxygen in selected quantities can be added to the gaseous volatile organic compounds.
17. The system (10) of any preceding clause, further including a flow rate control device (78) configured to control at a constant rate the rate at which the gaseous volatile organic compounds to which oxygen has been added are directed to the heating device (80) and the catalytic oxidizer (90).
18. The system (10) of any preceding clause, further including means (62, 63) configured to selectively allow the gaseous volatile organic compounds to bypass the apparatus (14) configured to control the emission of volatile organic compounds and be directed to a discharge location (66) outside the apparatus (14) configured to control the emission of volatile organic compounds.
19. The system (10) of any preceding clause, wherein both the apparatus (12) configured to reclaim used oil and the apparatus (14) configured to control the emission of volatile organic compounds are located on an over-the-road vehicle (16, 18).
20. The system (10) of any preceding clause, wherein the apparatus (12) configured to reclaim used oil is also configured to be operatively connected to an electric transformer installation (20) whereby oil from the electric transformer installation (20) can be directed to the apparatus (12) configured to reclaim used oil.

## Claims

1. A method of controlling emission of volatile organic compounds from oil reclaiming apparatus (12), the method including:
directing used oil for reclamation to the oil reclaiming apparatus (12);
releasing volatile organic compounds in the oil reclaiming apparatus (12) during the reclaiming of the used oil directed to the oil reclaiming apparatus (12);
directing the volatile organic compounds released in the oil reclaiming apparatus (12) to apparatus (14) for controlling the emission of volatile organic compounds;
converting the volatile organic compounds in the apparatus (14) for controlling the emission of volatile organic compounds to gaseous products that are free of volatile organic compounds to a selected degree; and
discharging from the apparatus (14) for controlling the emission of volatile organic compounds the gaseous products that are free of volatile organic compounds to a selected degree.

2. The method of claim 1, wherein both the oil reclaiming apparatus (12) and the apparatus (14) for controlling the emission of volatile organic compounds are located on an over-the-road vehicle (16, 18).

3. The method of claim 1 or claim 2, further including:
directing to the oil reclaiming apparatus (12) for reclamation oil from an electric transformer installation (20).

4. The method of any preceding claim, wherein the oil reclaiming apparatus (12) includes an oil processing chamber (50) that includes a vacuum and that is configured to reclaim the used oil.

5. The method of any preceding claim, further including:
releasing the volatile organic compounds as gaseous volatile organic compounds;
heating the gaseous volatile organic compounds in the apparatus (14) for controlling the emission of volatile organic compounds; and
passing the heated gaseous volatile organic compounds through a catalytic oxidizer (90) formed of bead-like elements and located in the apparatus (14) for controlling the emission of volatile organic compounds, and converting the gaseous volatile organic compounds to the gaseous products that are free of volatile organic compounds to a selected degree.

6. An oil reclaiming and volatile organic compound emission control system (10) including:
apparatus (12) configured to reclaim used oil; and
apparatus (14) operatively associated with the apparatus (12) configured to reclaim used oil and also configured to control the emission of volatile organic compounds released in the apparatus (12) configured to reclaim used oil.

7. The system (10) of claim 6, wherein both the apparatus (12) configured to reclaim used oil and the apparatus (14) configured to control the emission of volatile organic compounds are located on an over-the-road vehicle (16, 18).

8. The system (10) of claim 6 or claim 7, wherein the apparatus (12) configured to reclaim used oil is also configured to be operatively connected to an electric transformer installation (20) whereby oil from the electric transformer installation (20) can be directed to the apparatus (12) configured to reclaim used oil.

9. The system (10) of any of claims 6 to 8, wherein the apparatus (12) configured to reclaim used oil includes an oil processing chamber (50) that includes a vacuum and that is configured to reclaim the used oil.

10. The system (10) of any of claims 6 to 9, wherein the apparatus (14) configured to control the emission of volatile organic compounds includes:
a heating device (80) configured to receive gaseous volatile organic compounds released at the apparatus (12) configured to reclaim used oil and increase the thermal energy of the gaseous volatile organic compounds; and
a catalytic oxidizer (90) formed of bead-like elements and configured to convert the gaseous volatile organic compounds to gaseous products that are free of volatile organic compounds to a selected degree.

11. The system (10) of any of claims 6 to 10, further including a source of oxygen (72) from which oxygen in selected quantities can be added to the gaseous volatile organic compounds.

12. The system (10) of any of claims 6 to 11, further including a flow rate control device (78) configured to control at a constant rate the rate at which the gaseous volatile organic compounds to which oxygen has been added are directed to the heating device (80) and the catalytic oxidizer (90).

13. The system (10) of any of claims 6 to 12, further including means (62, 63) configured to selectively allow the gaseous volatile organic compounds to bypass the apparatus (14) configured to control the emission of volatile organic compounds and be directed to a discharge location (66) outside the apparatus (14) configured to control the emission of volatile organic compounds.

14. The system (10) of any of claims 6 to 13, wherein both the apparatus (12) configured to reclaim used oil and the apparatus (14) configured to control the emission of volatile organic compounds are located on an over-the-road vehicle (16, 18).

15. The system (10) of any of claims 6 to 14, wherein the apparatus (12) configured to reclaim used oil is also configured to be operatively connected to an electric transformer installation (20) whereby oil from the electric transformer installation (20) can be directed to the apparatus (12) configured to reclaim used oil.
